# EUROPÄISCHE PATENTSCHRIFT

(11) **EP 1 776 518 B1**
(45) Veröffentlichungstag und Bekanntmachung des Hinweises auf die Patenterteilung: **13.02.2013**
(21) Anmeldenummer: 05778971.1
(22) Anmeldetag: 16.06.2005
(51) Int. Cl.: F02D 11/10, G01D 5/14

(54) **SENSOR ZUR MESSUNG DER POSITION EINES STELLGLIEDES**
SENSOR FOR MEASURING THE POSITION OF AN ACTUATOR
CAPTEUR POUR MESURER LA POSITION D'UN ELEMENT DE REGLAGE

(30) Priorität: 19.07.2004 DE 102004034865
(43) Veröffentlichungstag der Anmeldung: 25.04.2007
(73) Patentinhaber: Continental Automotive GmbH, 30165 Hannover (DE)
(72) Erfinder: WALLRAFEN, Werner, 65719 Hofheim (DE)
(86) Internationale Anmeldenummer: PCT/EP2005/052794
(87) Internationale Veröffentlichungsnummer: WO 2006/008217

(56) Entgegenhaltungen:
- EP-A- 1 319 820
- US-A- 4 491 921
- US-A- 4 760 824
- US-A- 5 482 019

## Beschreibung

Die Erfindung betrifft einen Sensor zur Messung der Position eines über einen Antriebsanschluss elektromotorisch betriebenen Stellgliedes einer Brennkraftmaschine, wobei im Gehäuse des Stellgliedes mindestens ein Positionssensor angeordnet ist, der die Position an dem Antriebsanschluss erfasst.

An Sensoren dieser Art werden extrem hohe Zuverlässigkeitsanforderungen gestellt, da Fehlfunktionen oder Ausfälle unter Umständen auch Risiken hervorrufen können. Dies betrifft sowohl den Sensor selbst als auch dessen elektrische Verbindungen zu Schaltungen, welche den Sensor mit Betriebsspannung versorgen und die Ausgangssignale des Sensors empfangen und auswerten.

Dabei können die dazu benutzten Kabelverbindungen und Kontaktstellen Fehlerursachen darstellen, die selbst bei einer zweifachen Ausführung der Sensoren und der Verbindungselemente aus Redundanzgründen in sicherheitsrelevanten Systemen zu gravierenden Fehlern führen können. Ferner wird durch die zunehmende Einführung von elektronischen Geräten in Kraftfahrzeugen die Anzahl der Kabelverbindungen ständig größer, wobei aus Kosten- und Gewichtsgründen eine Verlegung von vielen Leitungen nachteilig ist.

Aufgabe der vorliegenden Erfindung ist es, einen Sensor der eingangs genannten Art anzugeben, der sich durch hohe Zuverlässigkeit und geringe Kosten auszeichnet.

Diese Aufgabe wird erfindungsgemäß dadurch gelöst, dass mindestens ein Positionssensor mit einer Schaltung verbunden ist, die eine Betriebsspannungsquelle enthält und Signale von dem mindestens einen Positionssensor empfängt, dass die Verbindung zwischen der Schaltung und dem mindestens einen Positionssensor über eine Spannung und Signal führende Leitung erfolgt, dass in der Schaltung mindestens eine Strommesseinrichtung in Reihe zur Betriebsspannungsquelle angeschlossen ist und dass über die Signale des mindestens einen Positionssensors in Abhängigkeit von der Position des Stellgliedes eine Stromänderung über die Leitung übertragen wird.

Der erfindungsgemäße Sensor ist in vorteilhafter Weise gegen äußere Einflüsse geschützt. Er selbst und Leitungsverbindungen bis zu einer Steckvorrichtung sind robuster und trotzdem preiswert herstellbar. Außerdem wird die Anzahl der erforderlichen Leitungen gegenüber bekannten Sensoren verringert.

Bei der Erfindung ist vorzugsweise vorgesehen, dass die Stromänderung binär mit einem Strompegel und einem anderen Strompegel ist, wobei der eine Strompegel dem durch eine Spannungsstabilisierungsschaltung im mindestens einen Positionssensor und durch die Betriebsspannungsquelle fließenden Strom und ein anderer Strompegel dem durch eine als Funktion der Signale zuschaltbare Last im Positionssensor erhöhten Strom entspricht.

Außer der Einsparung von Leitungen weist diese Weiterbildung der Erfindung den Vorteil auf, dass die Übertragungssicherheit an den Kontakten dadurch erhöht wird, dass der Strom durch die Kontakte einen kritischen Mindestwert nicht unterschreitet. Dadurch kann in den meisten Fällen auf Vergoldung der Kontakte verzichtet werden. Darüber hinaus führen bei der Erfindung Übergangswiderstände an Leitungen und Kontakten nicht zu Signaländerungen, wie es bei analogen Signalübertragungen bekannt ist.

Die binären Ausgangssignale können in jeweils zweckmäßiger Weise codiert sein, beispielsweise pulsbreitenmoduliert, frequenzmoduliert, manchestercodiert oder andere serielle Übertragungsverfahren. Die Ausgangssignale können nicht nur die Ausgangsgrößen des Positionssensors umfassen, sondern auch noch andere Daten, wie Diagnose und/oder Temperatur. Die Positionssensoren selbst können Hallsensoren sein oder auf magnetoresistiver oder induktiver Basis arbeiten.

Gegenüber Schnittstellen mit Analogsignalen hat die nach der Weiterbildung vorgesehene Schnittstelle den Vorteil einer höheren Sicherheit gegen Störsignale. Außerdem ergeben sich Einsparungen im Bereich der Analog/Digital-Umsetzung. Ferner ist ein Verpolungsschutz und ein Überspannungsschutz einfacher realisierbar, da kein ratiometrisches Analogsignal verwendet wird.

Die Weiterbildung kann auch derart ausgestaltet sein, dass bei mehreren Positionssensoren die Abhängigkeit der Signale von der Position des Stellgliedes von Positionssensor zu Positionssensor verschieden ist. Diese Maßnahme dient der Sicherheit für den Fall, dass die Leitungen beider Positionssensoren kurzgeschlossen werden und dies nicht in der Schaltung erkannt werden kann.

Eine vorteilhafte Ausführungsform der Erfindung besteht darin, dass zwei Positionssensoren über je zwei Leitungen mit der Schaltung verbunden sind und dass je Positionssensor eine Strommesseinrichtung vorgesehen ist. Demgegenüber kann die erfindungsgemäße Einrichtung bei verminderter Redundanz, jedoch auch bei geringerem Materialaufwand derart ausgebildet sein, dass zwei Positionssensoren über je eine Leitung und eine gemeinsame Leitung mit der Schaltung verbunden sind und dass je Positionssensor eine Strommesseinrichtung vorgesehen ist.

Bei diesen Weiterbildungen ist im Wesentlichen vorgesehen, dass zwei Sensoren verwendet werden, wobei sich im Falle von vier Leitungen - gegenüber sechs Leitungen bei konventioneller Technik - eine sehr hohe Systemverfügbarkeit gegeben ist, da bei jedem theoretischen Fehlerfall das System auf einem Kanal (Sensor + Leitungen) weiter betrieben werden kann.

Ferner ist bei der erfindungsgemäßen Einrichtung vorzugsweise vorgesehen, dass den Positionssensoren ein gemeinsames bewegliches Element zur Positionserfassung zugeordnet ist.

Eine andere vorteilhafte Ausgestaltung der erfindungsgemäßen Einrichtung besteht darin, dass die Strommesseinrichtung von einem Strommesswiderstand und einer Schwellwertschaltung gebildet ist.

Besonders zuverlässige und mechanisch stabile Ausführungen ergeben sich dadurch, dass die Positionssensoren jeweils als eine integrierte Schaltung mit zwei Anschlussstiften aufgebaut sind, die mit einem Metallgitter (lead frame) verschweißt sind, das in einem aus Kunststoff bestehenden Deckel des Gehäuses eingebettet ist. Zwei Anschlussstifte lassen sich zuverlässiger in automatischen Prozessen schweißen als drei oder mehr Anschlussstifte.

Die elektromagnetische Verträglichkeit kann bei der erfindungsgemäßen Einrichtung dadurch verbessert werden, dass die für die Leitungen vorgesehenen Anschlüsse des mindestens einen Positionssensors miteinander, vorzugsweise in der Nähe des Positionssensors, mit einem Kondensator verbunden sind. Dabei ist es vorteilhaft, wenn der Kondensator zusammen mit dem Positionssensor mit Kunststoff umspritzt ist.

Ein weiterer Vorteil der Zweidrahtverbindung liegt in der Einsparung eines zusätzlichen Kondensators, welcher bei analogen Sensoren für die zuführung der Versorgungsspannung vorgesehen ist.

Ausführungsbeispiele der Erfindung sind in der Zeichnung anhand mehrerer Figuren dargestellt und in der nachfolgenden Beschreibung näher erläutert. Es zeigt:
Fig. 1 ein Blockschaltbild eines ersten Ausführungsbeispiels,
Fig. 2 ein zweites Ausführungsbeispiel,
Fig. 3 und Fig. 4 Zeitdiagramme der in den Leitungen fließenden Ströme,
Fig. 5 ein detaillierteres Schaltbild eines Positionssensors,
Fig. 6 den Deckel eines elektromotorisch betriebenen Stellgliedes und
Fig. 7 ein in dem Deckel eingebettetes Stanzgitter.

Bei den Ausführungsbeispielen werden zwei Positionssensoren 1, 2 verwendet, um die Position eines beweglichen Gegenstandes 3 zu messen - beispielsweise eines Magneten. Zwei Positionssensoren werden zur Erhöhung der Sicherheit bei der Positionsmessung von sicherheitsrelevanten Vorrichtungen, beispielsweise der Drosselklappe eines Kraftfahrzeugmotors, verwendet. Die Positionssensoren sind als Baustein mit einer Kunststoffumhüllung 4 umspritzt. Sie verfügen jeweils über einen Anschluss 5, 6 und einen gemeinsamen Anschluss 7. Zur Verbindung mit entsprechenden Anschlüssen 8, 9, 10 einer Schaltung 11, die im folgenden auch Auswerteschaltung genannt wird, dienen Leitungen 18, 19, 20. Die Auswerteschaltung enthält eine Betriebsspannungsquelle 12, die jeweils über einen Strommesswiderstand 13, 14 mit den Anschlüssen 8, 9 und damit mit den Leitungen 18, 19 verbunden ist. Der Spannungsabfall von den Messwiderständen 13, 14 wird Verstärkern 15, 16 mit Schwellwertcharakteristik und Hysterese zugeführt, an deren Ausgängen 21, 22 Signale zur weiteren Verwendung zur Verfügung stehen.

Die Anschlüsse der Positionssensoren 1, 2 sind mit jeweils einem Kondensator 23, 24 überbrückt, um hochfrequente Einstrahlungen zu filtern. Die Kondensatoren 23, 24 sind derart bemessen, dass die von den Positionssensoren 1, 2 erzeugten Ausgangssignale nicht beeinträchtigt werden.

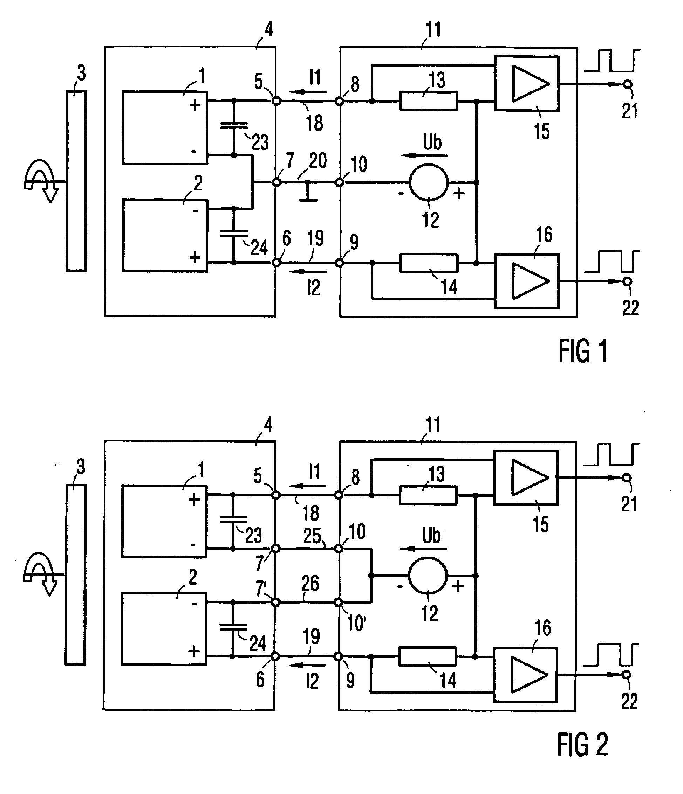

Die Einrichtung nach Fig. 2 unterscheidet sich von derjenigen nach Fig. 1 dadurch, dass anstelle einer gemeinsamen Leitung 20 (Fig. 1) jeweils eine Leitung 25, 26 je Positionssensor verwendet wird, die über Anschlüsse 7, 10 bzw. 7', 10' mit den Positionssensoren 1, 2 bzw. der Schaltung 11 verbunden ist. Dadurch ist zwar der Aufwand größer, im Falle einer Störung einer beliebigen Leitung ist jedoch der jeweils andere Positionssensor noch voll funktionsfähig.

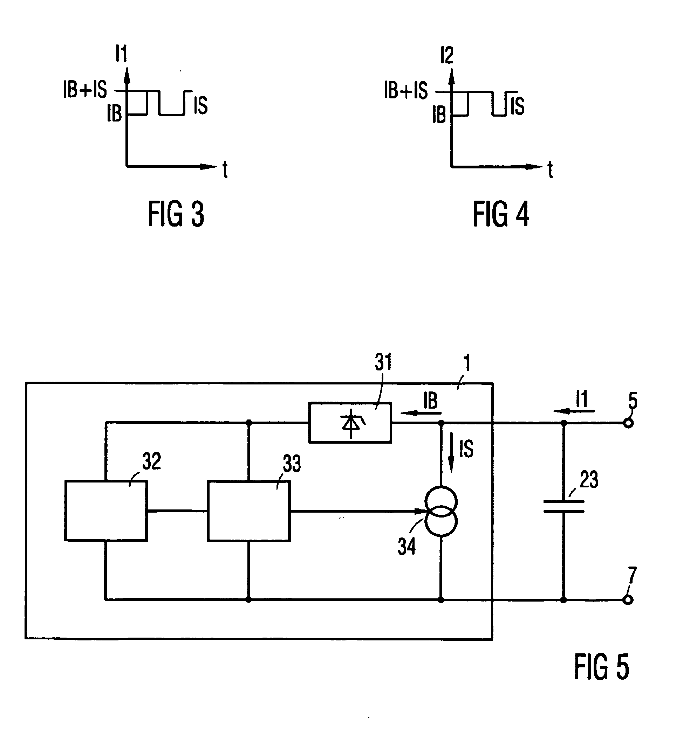

Die Figuren 3 und 4 zeigen den verlauf der Ströme 11 und I2, die jeweils aus einem konstanten Anteil IB, der zum Betrieb des Positionssensors benötigt wird, und einem pulsierenden Anteil IS bestehen, welcher der Amplitude des Ausgangssignals entspricht.

Fig. 5 zeigt den Positionssensor 1 in etwas detaillierterer Darstellung. Von dem Anschluss 5 gelangt der Strom IB zur Spannungsstabilisierungsschaltung 31, welche den eigentlichen Sensor 32 und eine Signalaufbereitungsschaltung 33 versorgt. Diese erzeugt ein zur Ansteuerung einer Stromsenke 34 geeignetes Signal, das pulsierend den Strom IS dem Betriebsstrom IB zuschaltet.

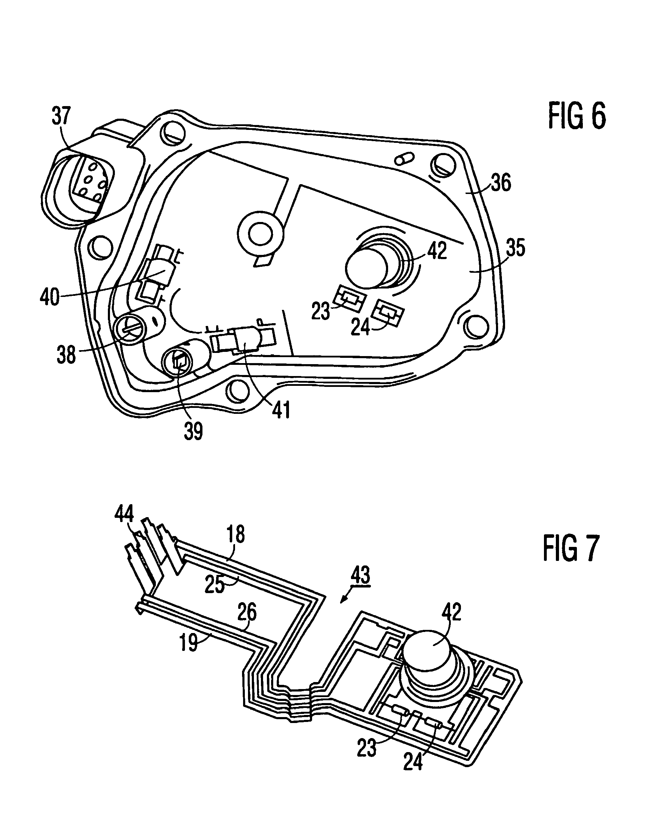

Fig. 6 zeigt den Deckel 35 eines nicht dargestellten Drosselklappengehäuses. Mit einem Flansch 36 wird der Deckel 35 mit dem Gehäuse verschraubt. An den Deckel 35 ist eine Mehrfachsteckvorrichtung 37 angeformt. Außerdem befinden sich zwei Steckverbinder 38, 39 an dem Deckel 35, welche im geschlossenen Zustand des Gehäuses eine Verbindung zwischen dem Stellmotor und der Steckvorrichtung 37 über Entstörmittel 40, 41 bilden. Diese sind in den aus Kunststoff bestehenden Deckel 35 eingebettet, ebenso wie als Stanzgitter ausgeführte Leitungen zwischen der Steckvorrichtung 37 und den Entstörmitteln 40, 41.

Fluchtend mit dem nicht dargestellten Antriebsanschluss der Drosselklappe ist im Deckel 35 ein Sensorkopf 42 angeordnet, der zwei Positionssensoren enthält und ebenfalls mit Leitungen 18, 19, 25, 26, die von einem Stanzgitter 43 (Fig. 7) gebildet sind, mit der Steckvorrichtung 37 verbunden ist. Das Stanzgitter 43 bildet gleichzeitig Kontaktstifte 44 der Steckvorrichtung 37. Die Kondensatoren 23, 24 sind in Fig. 6 nicht mit Kunststoff umspritzt dargestellt. Bei Vorliegen entsprechender Voraussetzungen ist es jedoch auch möglich, diese zu umspritzen.

## Patentansprüche

1. Sensoranordnung zur Messung der Position eines über einen Antriebsanschluss elektromotorisch betriebenen Stellgliedes einer Brennkraftmaschine,
- wobei die Sensoranordnung mindestens einen Positionssensor und eine mit dem mindestens einen Positionssensor verbundene Schaltung aufweist,
- wobei der mindestens eine Positionssensor in einem Gehäuse des Stellgliedes angeordnet ist und die Position an dem Antriebsanschluss erfasst,
- wobei die Schaltung (11) eine Betriebsspannungsquelle (12) enthält und Signale von dem mindestens einen Positionssensor (1, 2) empfängt,
- wobei die Verbindung zwischen der Schaltung (11) und dem mindestens einen Positionssensor (1, 2) über eine Betriebsspannung für den mindestens einen Positionssensor und Signale führende Leitung (18, 19) erfolgt,
- wobei in der Schaltung (11) mindestens eine Strommesseinrichtung (13, 15; 14, 16) in Reihe zur Betriebsspannungsquelle (12) angeschlossen ist und
- wobei über die Signale des mindestens einen Positionssensor (1, 2) in Abhängigkeit von der Position des Stellgliedes eine Stromänderung über die Leitung (18, 19) übertragen wird.

2. Sensoranordnung nach Anspruch 1, **dadurch gekennzeichnet, dass** die Stromänderung binär mit einem Strompegel und einem anderen Strompegel ist, wobei der eine Strompegel dem durch eine Spannungsstabilisierungsschaltung (31) im mindestens einen Positionssensor (1, 2) und durch die Betriebsspannungsquelle (12) fließenden Strom und ein anderer Strompegel dem durch eine als Funktion der Signale zuschaltbare Last (34) im Positionssensor (1, 2) erhöhten Strom entspricht.

3. Sensoranordnung nach einem der Ansprüche 1 oder 2, **dadurch gekennzeichnet, dass** bei mehreren Positionssensoren (1, 2) die Abhängigkeit der Signale von der Position des Stellgliedes von Positionssensor (1) zu Positionssensor (2) verschieden ist.

4. Sensoranordnung nach einem der Ansprüche 1 bis 3, **dadurch gekennzeichnet, dass** zwei Positionssensoren (1, 2) über je zwei Leitungen (18, 25; 19, 26) mit der Schaltung (11) verbunden sind und dass je Positionssensor (1, 2) eine Strommesseinrichtung (13, 15; 14, 16) vorgesehen ist.

5. Sensoranordnung nach einem der Ansprüche 1 bis 3, **dadurch gekennzeichnet, dass** zwei Positionssensoren (1, 2) über je eine Leitung (18, 19) und eine gemeinsame Leitung (20) mit der Schaltung (11) verbunden sind und dass je Positionssensor (1, 2) eine Strommesseinrichtung (13, 15; 14, 16) vorgesehen ist.

6. Sensoranordnung nach einem der Ansprüche 4 oder 5, **dadurch gekennzeichnet, dass** den Positionssensoren (1, 2) ein gemeinsames bewegliches Element (3) zur Positionserfassung zugeordnet ist.

7. Sensoranordnung nach einem der vorhergehenden Ansprüche, **dadurch gekennzeichnet, dass** die Strommesseinrichtung von einem Strommesswiderstand (13, 14) und einer Schwellwertschaltung (15, 16) gebildet ist.

8. Sensoranordnung nach einem der vorhergehenden Ansprüche, **dadurch gekennzeichnet, dass** die Positionssensoren (1, 2) jeweils als eine integrierte Schaltung mit zwei Anschlussstiften aufgebaut sind, die mit einem Stanzgitter (lead frame) verschweißt sind, das in einem aus Kunststoff bestehenden Deckel (35) des Gehäuses eingebettet ist.

9. Sensoranordnung nach einem der vorhergehenden Ansprüche, **dadurch gekennzeichnet, dass** die für die Leitungen (18, 19) vorgesehenen Anschlüsse des mindestens einen Positionssensors (1, 2) miteinander mit einem Kondensator (23, 24) verbunden sind.

10. Sensoranordnung nach Anspruch 9, **dadurch gekennzeichnet, dass** der Kondensator (23, 24) zusammen mit dem Positionssensor (1, 2) mit Kunststoff umspritzt ist.

## Claims

1. Sensor arrangement for measuring the position of an actuator, which is electromotively operated via a drive connection, of an internal combustion engine,
- the sensor arrangement having at least one position sensor and a circuit connected to the at least one position sensor,
- the at least one position sensor being arranged in a housing of the actuator and detecting the position at the drive connection,
- the circuit (11) containing an operating voltage source (12) and receiving signals from the at least one position sensor (1, 2),
- the connection between the circuit (11) and the at least one position sensor (1, 2) taking place via a line (18, 19), which carries operating voltage for the at least one position sensor and signals,
- at least one current measuring device (13, 15; 14, 16) being connected in series with the operating voltage source (12) in the circuit (11), and
- a current change being transmitted over the line (18, 19) via the signals from the at least one position sensor (1, 2) depending on the position of the actuator.

2. Sensor arrangement according to Claim 1, **characterized in that** the current change is binary with one current level and another current level, the one current level corresponding to the current flowing through a voltage stabilization circuit (31) in at least one position sensor (1, 2) and through the operating voltage source (12), and another current level corresponding to the current increased by a load (34), which can be connected as a function of the signals, in the position sensor (1, 2).

3. Sensor arrangement according to either of Claims 1 and 2, **characterized in that**, in the case of a plurality of position sensors (1, 2), the dependence of the signals on the position of the actuator is different from position sensor (1) to position sensor (2).

4. Sensor arrangement according to one of Claims 1 to 3, **characterized in that** two position sensors (1, 2) are connected to the circuit (11) via in each case two lines (18, 25; 19, 26), and **in that** one current measuring device (13, 15; 14, 16) is provided per position sensor (1, 2).

5. Sensor arrangement according to one of Claims 1 to 3, **characterized in that** two position sensors (1, 2) are connected to the circuit (11) via in each case one line (18, 19) and a common line (20), and **in that** one current measuring device (13, 15; 14, 16) is provided per position sensor (1, 2).

6. Sensor arrangement according to either of Claims 4 and 5, **characterized in that** a common movable element (3) for detecting the position is associated with the position sensors (1, 2).

7. Sensor arrangement according to one of the preceding claims, **characterized in that** the current measuring device is formed by a current measuring resistor (13, 14) and a threshold value circuit (15, 16).

8. Sensor arrangement according to one of the preceding claims, **characterized in that** the position sensors (1, 2) are each in the form of an integrated circuit with two connection pins, which are welded to a lead frame, which is embedded in a plastic cover (35) of the housing.

9. Sensor arrangement according to one of the preceding claims, **characterized in that** the connections, which are provided for the lines (18, 19), of the at least one position sensor (1, 2) are connected to one another by a capacitor (23, 24).

10. Sensor arrangement according to Claim 9, **characterized in that** the capacitor (23, 24), together with the position sensor (1, 2), has plastic injected around it.

## Revendications

1. Agencement de capteur pour la mesure de la position d'un actionneur, électromotorisé par l'intermédiaire d'une borne d'entraînement, d'un moteur à combustion interne,
- dans lequel l'agencement de capteur a au moins un capteur de position et un circuit relié au au moins un capteur de position,
- dans lequel le au moins un capteur de position est disposé dans une enveloppe de l'actionneur et détecte la position sur la borne d'entraînement,
- dans lequel le circuit (11) comporte une source (12) de tension de service et reçoit des signaux du au moins un capteur (1, 2) de position,
- dans lequel la liaison entre le circuit (11) et le au moins un capteur (1, 2) de position s'effectue par une tension de service pour le au moins un capteur de position et par une ligne (18, 19) conduisant des signaux,
- dans lequel au moins un dispositif (13, 15 ; 14, 16) de mesure du courant est monté dans le circuit (11) en série avec la source (12) de tension de service, et
- dans lequel une variation de courant sur la ligne (18, 19) est transmise par les signaux du au moins un capteur (1, 2) de position en fonction de la position de l'actionneur.

2. Agencement de capteur suivant la revendication 1, **caractérisé en ce que** la variation de courant est binaire en ayant un niveau de courant et un autre niveau de courant, l'un des niveaux de courant correspondant au courant passant par un circuit (31) de stabilisation de la tension dans le au moins un capteur (1, 2) de position et par la source (12) de tension de service et un autre niveau de courant correspondant au courant rendu plus intense dans le capteur (1, 2) de position, par une charge (34) qui peut être branchée en fonction des signaux.

3. Agencement de capteur suivant l'une des revendications 1 ou 2, **caractérisé en ce que**, lorsqu'il y a plusieurs capteurs (1, 2) de position, la variation des signaux en fonction de la position de l'actionneur est différente d'un capteur (1) de position à l'autre (2).

4. Agencement de capteur suivant l'une des revendications 1 à 3, **caractérisé en ce que** deux capteurs (1, 2) de position sont reliés au circuit (11) par respectivement deux lignes (18, 25 ; 19, 26) et **en ce qu'**un dispositif (13, 15 ; 14, 16) de mesure du courant est prévu pour chaque capteur (1, 2) de position.

5. Agencement de capteur suivant l'une des revendications 1 à 3, **caractérisé en ce que** deux capteurs (1, 2) de position sont reliés au circuit (11) par respectivement une ligne (18, 19) et par une ligne (20) commune et **en ce qu'**un dispositif (13, 15 ; 14 ; 16) de mesure du courant est prévu pour chaque capteur (1, 2) de position.

6. Agencement de capteur suivant l'une des revendications 4 ou 5, **caractérisé en ce qu'**un élément (3) mobile commun de détection de position est associé aux capteurs (1, 2) de position.

7. Agencement de capteur suivant l'une des revendications précédentes, **caractérisé en ce que** le dispositif de mesure du courant est formé d'une résistance (13, 14) de mesure du courant et d'un circuit (15, 16) de valeur de seuil.

8. Agencement de capteur suivant l'une des revendications précédentes, **caractérisé en ce que** les capteurs (1, 2) de position sont sous la forme respectivement d'un circuit intégré ayant deux broches de borne, qui sont soudées à une grille de connexion (lead frame) qui est incorporée dans un couvercle (35) en matière plastique de l'enveloppe.

9. Agencement de capteur suivant l'une des revendications précédentes, **caractérisé en ce que** les bornes, prévues pour les lignes (18, 19), du au moins un capteur (1, 2) de position, sont reliées entre elles par un condensateur (23, 24).

10. Agencement de capteur suivant la revendication 9, **caractérisé en ce que** le condensateur (23, 24) est, ensemble avec le capteur (1, 2) de position, recouvert de matière plastique par extrusion.
